# EUROPEAN PATENT APPLICATION

(11) **EP 1 526 684 A1**
(43) Date of publication of application: **27.04.2005**
(21) Application number: 04256272.8
(22) Date of filing: 11.10.2004
(51) Int. Cl.: H04L 12/28

(54) **Communication system**

(30) Priority: 24.10.2003 GB 0324878
(71) Applicant: Nokia Corporation, 00045 Espoo (FI)
(72) Inventor: Tuomi, Jukka, 33730 Tampere (FI)
(74) Representative: Style, Kelda Camilla Karen

(57) **Abstract**

This invention relates to a communication system comprising a user equipment, an access network to which said user equipment is attachable and an access controller connected to said access network and a domain, said access controller being arranged to receive a query from said user equipment for a service provided by said domain or a service accessible via said domain, to check if said user equipment is authorized and if so to permit said user equipment to obtain said service from or via said domain.

## Description

### Field of the Invention

The present invention relates to a communication system and in particular but not exclusively to a communication system having an end user connected to a WLAN and able to obtain services provided by or via a mobile operator domain.

### Background of the Invention

A communication system can be seen as a facility that enables communication between two or more entities such as user equipment and/or other nodes associated with the system. The communication may comprise, for example, communication of voice, data, multimedia and so on.

A communication system typically operates in accordance with a given standard or specification, which sets out what the various elements of the system are permitted to do and how that should be achieved. For example, the standard or specification may define if the user or more precisely user equipment or terminal is provided with the circuit switched service and or a packet switched service.

Communication protocols and/or parameters, which should be used for the connection may also be defined. In other words, a specific set of rules on which a communication can be based need to be defined to enable communication by means of a system.

Public wireless local area networks WLAN have been proposed. Operators of mobile telephone (or other user equipment) networks generally want to offer WLAN services to their clients but at least some of these mobile operators do not want to build the WLAN access networks themselves. One proposal is that wireless Internet service providers (WISP) will build and operate the access zones. The mobile operators will want to provide added services for the WLAN end user as easily as possible from the perspective of the end user.

With the current proposals, authorization for services provided by or via the mobile operator's service infrastructure require tight end-user traffic control from the WISP operated WLAN access zone. However, the reality of the situation is that the existing WLAN networks are built using equipment that is not able to easily provide this kind of traffic control functionality.

Whilst it may be possible to replace the existing WISP access zone equipment with equipment that can tightly control the end user traffic from the WLAN access zone, the business realities are such that this kind of replacement will not take place in practice.

### Summary of the Invention

It is an aim of embodiments of the present invention to address the above described problems.

According to a first aspect of the invention, there is provided a communication system comprising a user equipment, an access network to which said user equipment is attachable and an access controller connected to said access network and a domain, said access controller being arranged to receive a query from said user equipment for a service provided by said domain or a service accessible via said domain, to check if said user equipment is authorized and if so to permit said user equipment to obtain said service from or via said domain.

According to a second aspect of the invention there is provided, an access controller for use in a communication system which also comprises a user equipment, an access network to which said user equipment is attachable, said access controller being connectable to said access network and a domain, said access controller being arranged to receive a query from said user equipment for a service provided by said domain or a service accessible via said domain, to check if said user equipment is authorized and if so to permit said user equipment to obtain said service from or via said domain.

According to a third aspect of the invention, there is provided a communication method comprising receiving at an access controller a query from user equipment attached to an access network for a service provided by a domain or a service accessible via said domain, checking if said user equipment is authorized and if so to permitting said user equipment to obtain said service from or via said domain.

### Brief Description of Drawings

For a better understanding of the present invention and as to how the same may be carried into effect, reference will now be made by way of example only to the accompanying drawings in which:
Figure 1 shows data flow in embodiments of the present invention;
Figure 2 shows authorization to operator hosted services with Figure 2a showing access authentication, Figure 2b showing the DNS query procedure and Figure 2c showing traffic control;
Figure 3 shows third party services authorized by the mobile operator with Figure 3a showing the DNS query procedure and Figure 3b the traffic control; and
Figure 4 shows a WISP user accessing an Internet site with Figure 4a showing the DNS query procedure and Figure 4b the traffic flow.

### Detailed description of preferred embodiments of the present invention.

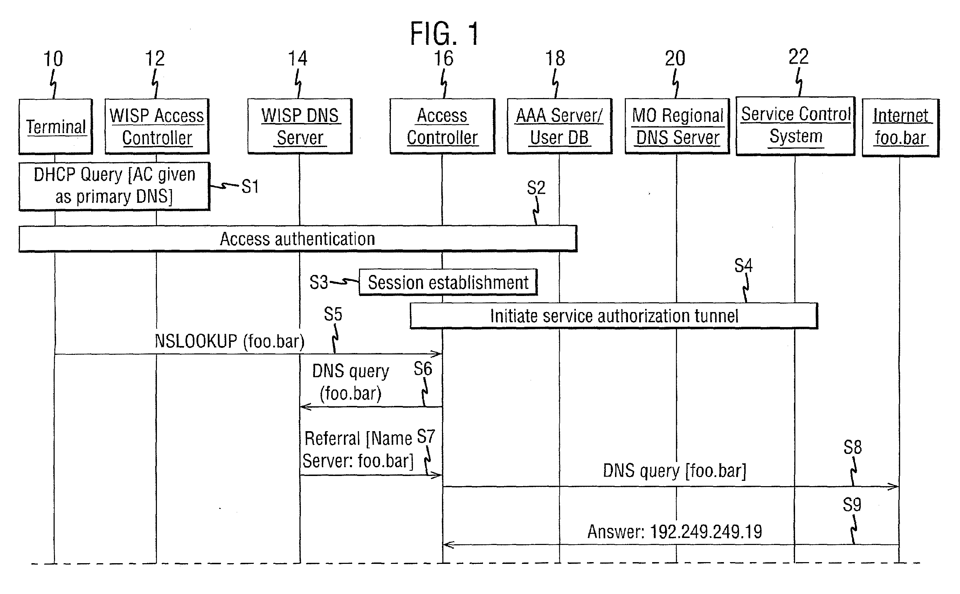

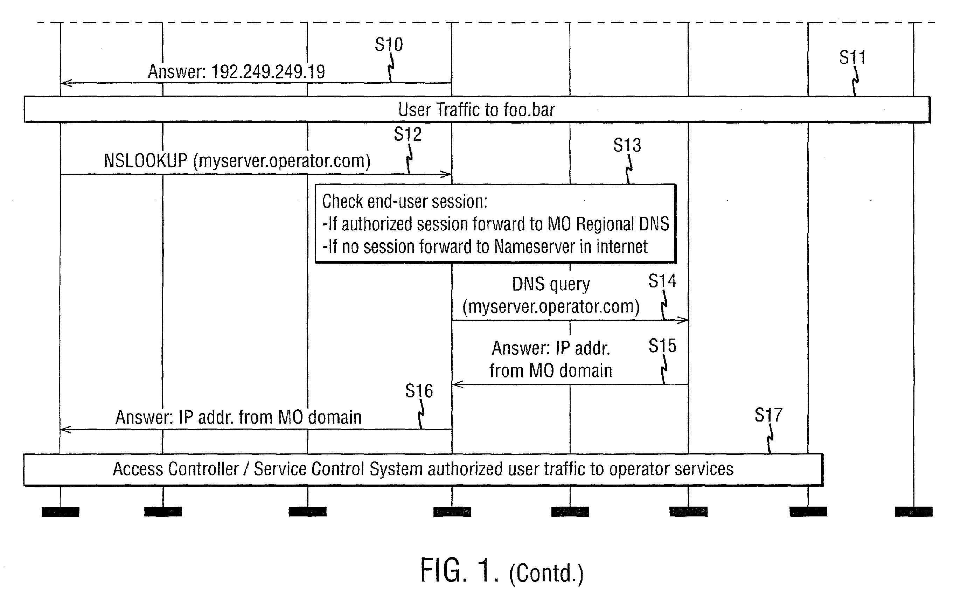

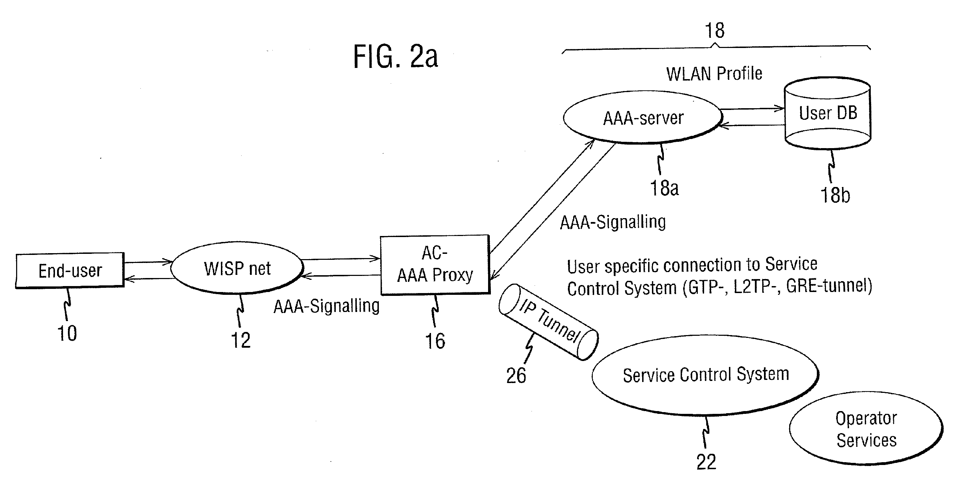

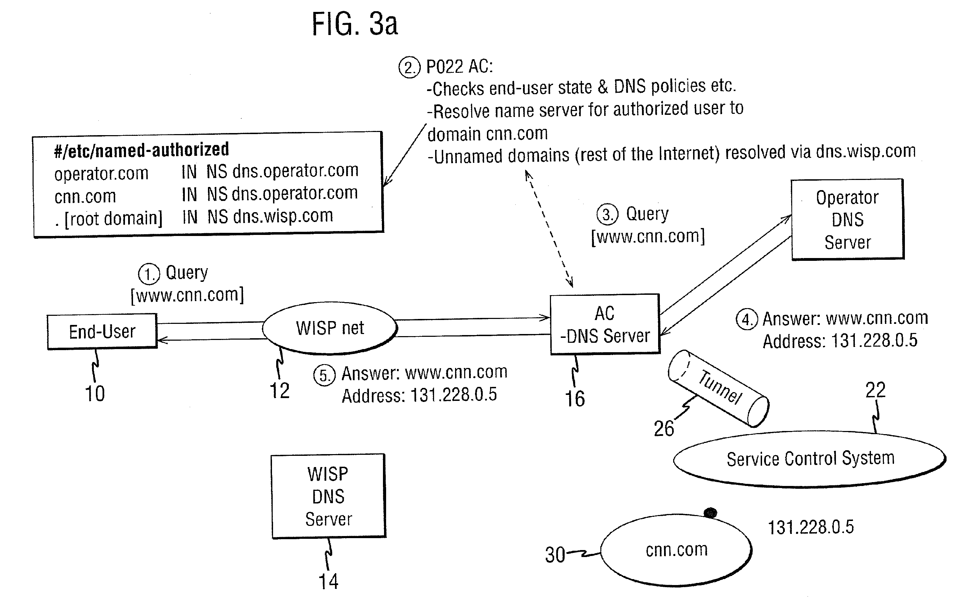

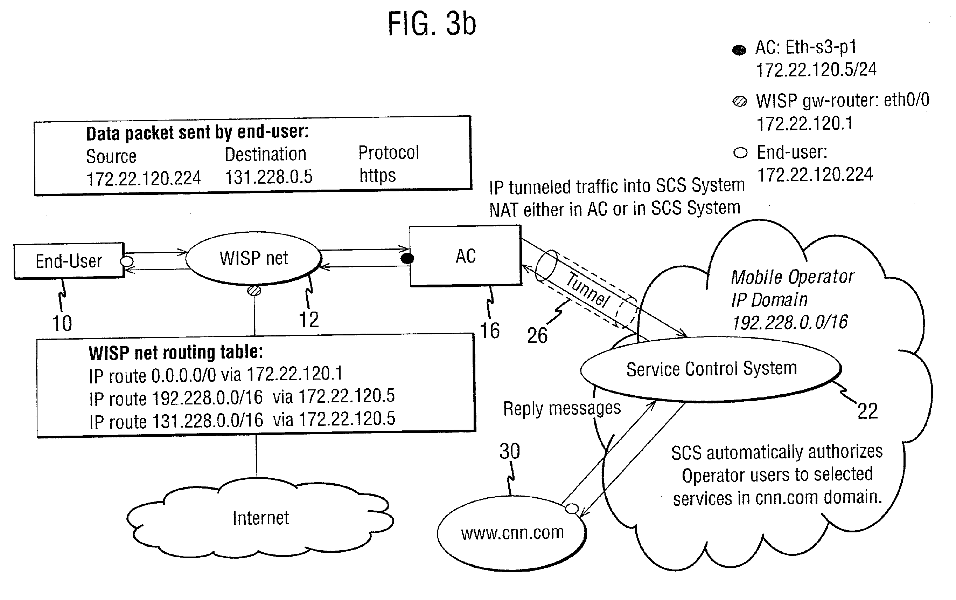

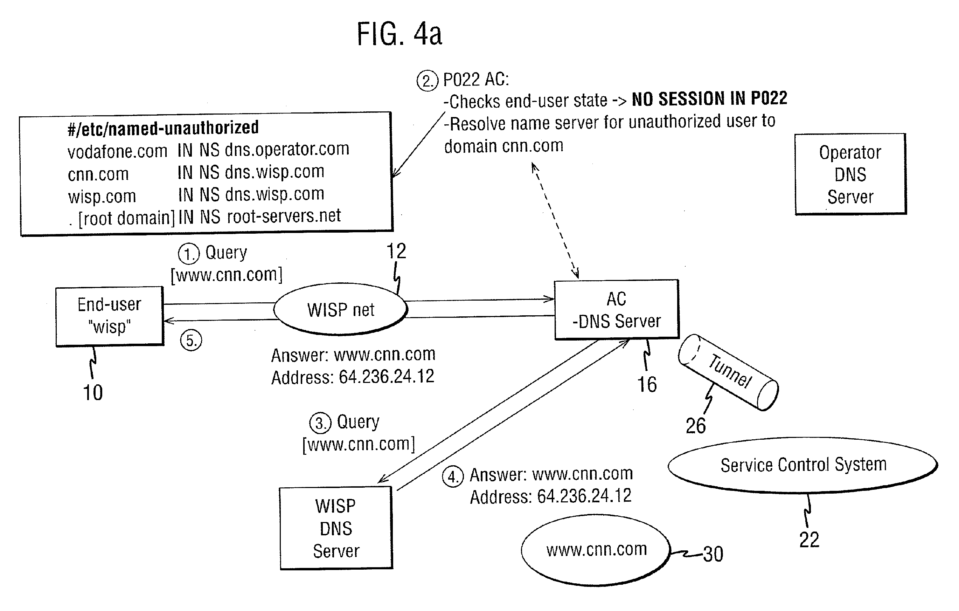

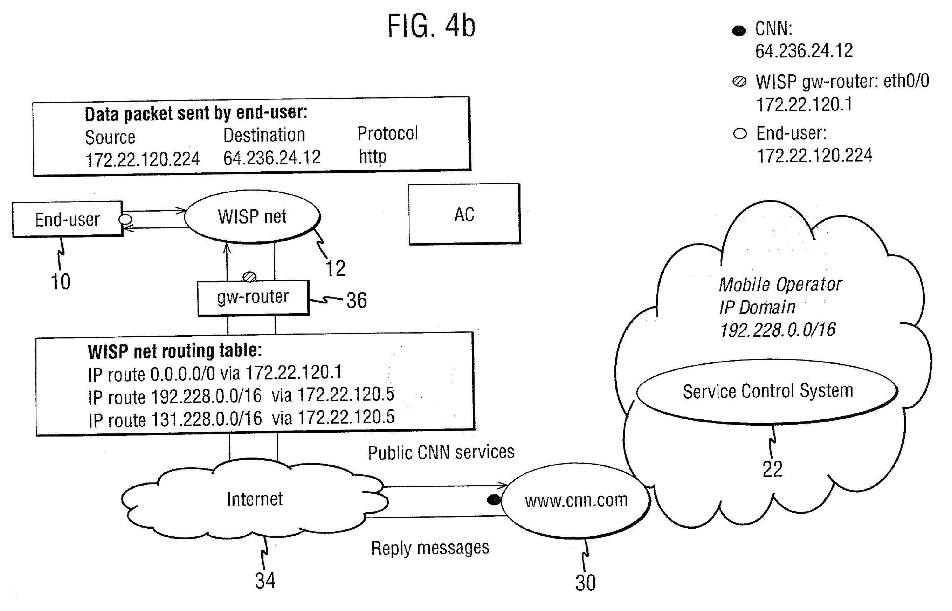

Reference will now be made to figures 1 to 4 to describe embodiments of the present invention. Figure 1 shows data flow in two scenarios, figures 2a to 2c show the data flow in an network where services are found under the operator domain, figures 3a and 3b show the data flow where third party services are authorized by the mobile operator and figures 4a and 4b show the data flow where an end user uses the wireless Internet server provider Radius server.

Reference will first be made to figure 1. In figure 1, an end user terminal 10 is arranged in step S1 to send a DHCP (dynamic host configuration protocol) query to a WISP (wireless Internet service provider) access controller 12. The terminal can be any type of suitable user equipment such as a mobile telephone, PDA (personal digital assistant), lap top computer or the like. The terminal 10 is in preferred embodiments of the present invention wireless equipment, which is arranged to attach to a wireless LAN (local area network) which is controlled by the WISP access controller 12. This DHCP query will identify a mobile operator access controller 16 as the primary domain name server.

In step S2, access authentication is carried out. This will be described in more detail in relation to figure 2a. Access authentication involves the authentication of the terminal 10 by an authentication server arrangement. This is marked by reference 18 in figure 1. In one embodiment of the present invention the authentication is provided by an AAA server 18a (authentication, authorization and accounting), which may require data stored in a home location register (HLR) and/or a user profile database 18b. The actual process of authentication of the end user carried out by the authentication server arrangement is well known. The authentication requires the passing of data from the terminal to the authentication server 18 via the mobile operator access controller 16. At this stage the mobile operator access controller 16 is acting as an AAA-proxy server (the AAA-proxy is an AAA-signalling routing element in the network). By following the AAA-signalling, the mobile operator access controller 16 is able to follow the end-user session status.

In step S3, the access controller 16 establishes a session for the terminal 10 if the terminal is authorized by the back-end of the AAA-Server.

In step S4, the mobile operator access controller 16 may act as a service control system by itself or it may be a forwarding element towards the mobile operator's service control system. In the latter case the connection to elements handling the service controlling functions is established during the end-user access authentication.

In step S5, the terminal 10 sends a query identifying the service or Internet site (foo.bar in this example) to which the user wishes to be connected. This query is sent to the mobile operator access controller 16.

In step S6, the access controller sends a DNS query to a WISP DNS server 14(or any other DNS server that is representing the Internet Domain Name Space - this phase follows the normal Domain Name System (DNS) procedures). In step S7, the WISP DNS server provides the name of the server back to the mobile operator access controller. In step S8, the mobile operator access controller sends the DNS query to the identified service, that is foo.bar 24. In reply, in step S9, an address corresponding to foo.bar is sent back from the service to the mobile operator access controller 16. This address is sent in step S10 from the mobile operator access controller 16 to the terminal 10. In step S11, there is user traffic between the terminal 10 and the service foo.bar 24.

In step S12, the terminal 10 wishes to access a mobile operator hosted service and sends a DNS query to resolve the IP address for that service (my server.operator.com in the example) to the mobile operator access controller 16. In step S13, the mobile operator access controller 16 checks the end user session. If the terminal 10 has been authorized, then a DNS query is sent in step S14 to the mobile operator DNS server 20. This DNS server may be the access controller itself or a nominated server for this region only. In the example shown in figure 1, the user has been authorized already in step S2 and a session has been established in S3. This session is still in place. If there is no session, then the request is forwarded to an Internet server and a conventional Internet connection is established.

If the next step is S14, then that will be followed by step S15 where an IP address is provided from the mobile operator DNS server 20 to the mobile operator access controller 16. This address is forwarded by the mobile operator access controller 16 in step S16 to the terminal 10. In step S17, the mobile operator access controller or service control system authorizes user traffic to the mobile operator service.

The service control system is the system that is able to authorize end-users to mobile operator's services.

Reference will now be made to figures 2a to 2c, which show how the various network elements are connected together and the steps to establish a connection to an operator hosted service. This will correspond to the myserver.operator.com example of Figure 1.

In figure 2a, access authentication is illustrated. This corresponds to steps S2, S3 and S4 shown in figure 1.

The WISP network including the WISP access controller (the WISP network is reference 12 for simplicity) provides the mobile operator access controller 16 with an IP address for the end user or terminal 10. In case the AAA-protocol is Radius, then IP address is resolved in the mobile operator access controller 16 from the attribute named framed-IP-address in the access-request or accounting-start message. It should appreciated that this is also compatible with the authentication defined in the IEEE standard 802.1x where the IP address is resolved from the framed-IP-address in the accounting-start message. The resolved IP address is sent by the mobile operator access controller 16 to the authorization arrangement 18. In the embodiment shown in figure 2a, the authorization arrangement 18 comprises an AAA server 18a, which is connected to or contains a user database 18b. In preferred embodiments of the present invention, the AAA server 18a operates in accordance with the Radius or Diameter protocols.

The profile database may contain subscription information, the user name, passwords, attributes, access gateways associated with the end user or the like.

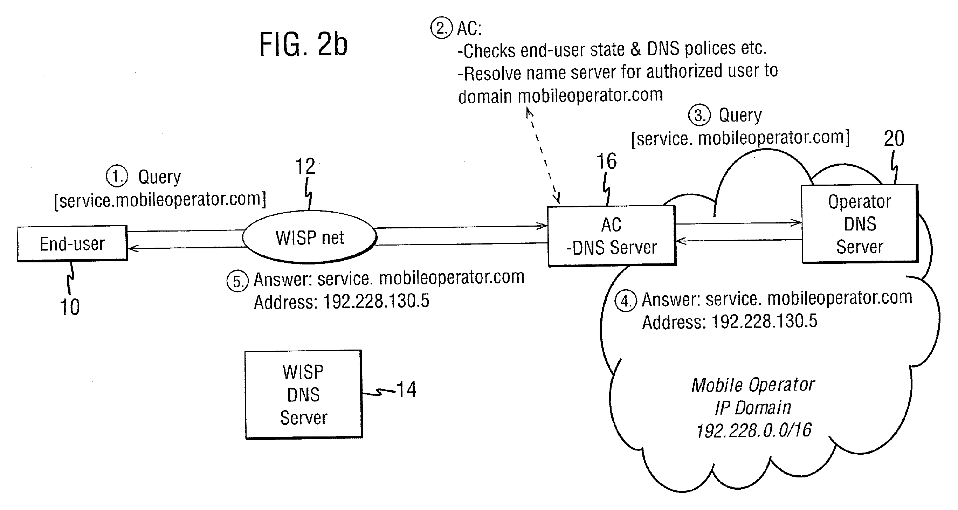

Reference is now made to figure 2b, which shows the DNS query. This corresponds to steps S14 to S16 shown in figure 1.

The end user has sent a query. In the example shown, the end user 10 wishes to access a service hosted by the mobile operator. The query therefore takes the form of service.operator.com. This corresponds to request S12 shown in figure 1. This query is sent via the WISP network 12 to the mobile operator access controller 16. The mobile operator access controller checks the end user state, that is checks to see whether or not the user is authorized or not. In this particular example, the user has been authorized as explained in relation to figure 2a. The access controller also checks the domain name server policies and the like. In this case, as the user authorized, the access controller resolves the name server for the authorized user to the operator.com domain. In other words, the mobile operator access controller 16 sends a DNS query to the operator DNS server 20. The operator DNS server replies with information identifying the service (e.g. service.operator.com) and the IP address of that service. That address is returned to the WISP network via the mobile access controller 16.

It should be appreciated that the mobile operator access controller 16 effectively acts an AAA proxy.

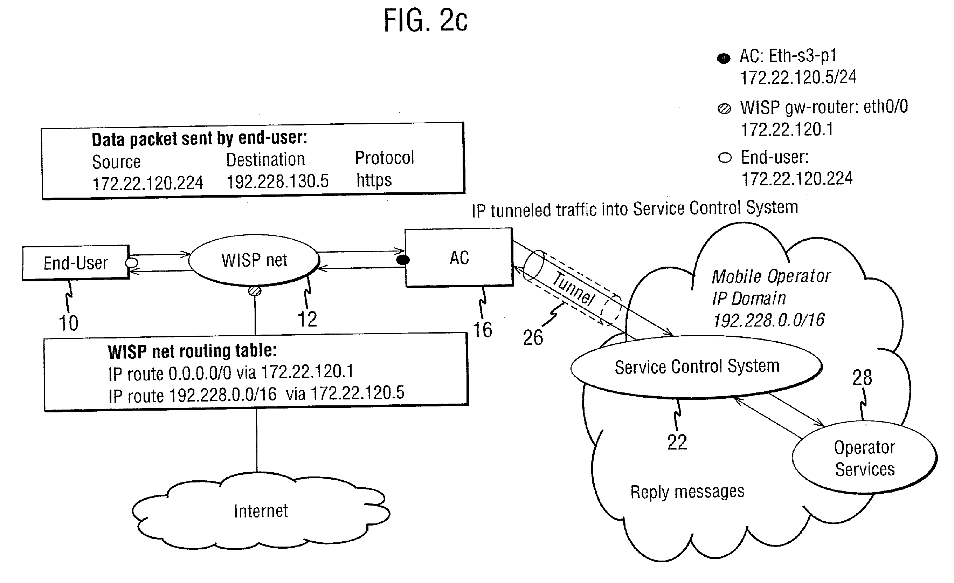

Reference is now made to figure 2c, which shows the traffic between the terminal 10 and the operator service. The end user sends an IP data packet, which includes the source address i.e. the address of the end user and the destination address. The destination address is the address returned by the vodafone DNS server 16. The data packet will also indicate the protocol used. The WISP network 12 will have a routing table 13, which is used to control the routing of the data packets sent by the end user. The routing table causes the packet, which is intended for the destination to be routed by via the mobile operator access controller 16. The mobile operator access controller 16 will route the data packet to the service control system (which is part of the mobile operator IP domain).

The service control system 22 routes the packet to the required operator service 28. It is likely that either in mobile operator's access controller or in the service control system address translation (NAT) will take place in order that data packets can be returned to the end user via the same route. The operator services are thus provided via the mobile operator IP domain.

Reference is now made to figure 3a and 3b, which show third party services which are authorized by the mobile operator. In this particular example, a mobile operator user wishes to connect to WWW.CNN.com, that is a service in a domain of a third party different to the mobile operator. The access authentication is as shown in relation to figure 2a and will not be described again.

Figure 3a shows the DNS query procedure. The end user sends a query identifying the third party service, which is in this example WWW.CNN.com. This is forwarded via the WISP network 12 to the mobile operator access controller 16. As with the arrangement shown in figure 2b, the access controller 26 is arranged to check the end user state, that is whether it is authorized and a session established and also the DNS policies etc.

The mobile operator access controller 16 resolves the named server for an authorized user to the domain CNN.com. The rest of the domains, which are unnamed would be resolved via the WISP DNS server 14. Where the name server is resolved for an authorized user, the query is then set to the mobile operator DNS server 20. This replies with information identifying the service i.e. WWW.CNN.com and its IP address. This address is sent to the WISP network 12.

Figure 3b shows the traffic control in this embodiment. The end user sends a data packet to the WISP network 12. The packet sent by the end user identifies the source address of the end user and the destination address corresponding to WWW.CNN.com. The WISP network uses the routing table 13 to route the data packet via the mobile operator access controller 16. The data packet is then sent to the service control system 22. A network address translator is provided either in the access controller 16 or the service control system 22. The service control system automatically authorizes mobile operator users to select services in the CNN.com domain 30. The service control system 22 is part of the mobile operator IP domain. This allows the end user to access services provided by WWW.CNN.com, which may require authorization of the user.

For completeness sake, figures 4a and 4b show the scenario where it is determined that the end user has not been authorized. In this case, the access controller sends the query to the WISP DNS server 14. The WISP DNS server 14 returns information identifying WWW.CNN.com and its IP address. The access controller 16 receives this information and sends it to the WISP network 12.

The traffic flow is shown in figure 4b. The data packet is sent by the end user to the WISP network 12. The WISP network 12 uses a gateway router 32 in conjunction with a routing table 13 to route the packet from the end user to CNN.dom via the gateway router 32. The packet is then routed via the Internet 34 to the WWW.CNN.com domain 30.

Embodiments of the present invention mean that at the same time the end user is authenticated to get the WLAN access service, the end user is also authorized to the mobile operator's service infrastructure. Affectively, this allows traffic control with out actually controlling the traffic itself. Thus, embodiments of the present invention allow the control of end user traffic based on the domain name system. This DNS based traffic control allows the mobile operator to control how to route the end user traffic even in the cases where the actual routers are operated by a third party service provider.

Embodiments of the present invention provide the possibility of controlling end user traffic without requiring new functionality in the WISP access zone equipment. Automatic service authorization may be provided to WLAN subscribers. This is very compatible with the public WLAN business model. The advantage of preferred embodiments of the present invention is that the plain Internet traffic, which has nothing to do with the mobile operator domain, is not forced to go through the operator network and thus does not unnecessarily load the mobile operator's equipment.

Additionally, as the embodiments of the present invention do not require any changes to the WISP architecture nor any new features for the WISP's network elements, this means that embodiments of the invention are backwards compatible.

The mobile operator access controller in embodiments of the present invention thus acts as an AAA proxy and establishes the state for the end users i.e. whether or not the end user is authorized. This end user state may include DNS specific information based on the end user's subscription. When the end user is requesting address information for predefined domains, the access controller participates in the DNS resolution process either by answering from its own database or by sending a DNS referral to the correct DNS server based on the end user status.

Embodiments of the present invention have been described in a WLAN context. However, it should be appreciated that embodiments of the present invention have wider application. For example, embodiments of the present invention can be implemented in a an IP based network independent of access method; a WLAN; a xDSL network; an Ethernet; a GPRS network, a 3G network; and a Bluetooth network. Embodiments of the present invention can be implemented where a user is connected to a first access network, which allows the user to be connected to a mobile operator network where the access network is not part of the mobile operator's network.

Embodiments of the present invention control the end user traffic only if the end user tries to access the server or gateway in the mobile operator operated domain or to predefined other domains. This enables service authorization for the WLAN end user in all existing access zone topologies. Embodiments of the present invention are independent of the access authentication methods. Embodiments of the present invention may support both open systems and the IEEE 802.1x authentication. This embodiment of the present invention enables all features that the service control system can offer for GTP tunnelled WLAN users.

Embodiments of the present invention enable service authorization for WLAN end users in all existing access zone topologies. Embodiments of the present invention can be generically applied. Access technology which use Radius or Diameter can be supported. Radius and Diameter are defined in: Radius standards IETF (Internet Engineering Task Force) rfc-2865, 2866, 2869 and 3580, http://www.ietf.org/rfc/rfc3580.txt?number=3580; and Diameter IETF rfc-3588 (Diameter base protocol) http://www.ietf.org/rfc/rfc3588.txt?number=3588 respectively. The domain name system is defined in DNS IETF rfc-1035 http://www.ietf.org/rfc/rfc1035.txt?number=1035. These three standards are hereby incorporated by reference.

The mobile operator DNS server is given as the primary DNS server in the DHCP query phase.

Embodiments of the present invention require the access controller to make use of Radius signalling based end user session awareness. Before the access controller DNS queries the next DNS server, the access controller verifies that the requesting IP address has a valid session and checks end user specific DNS settings. The DNS settings for the WLAN in the user profile are transferred from the application server to the access controller in Radius messages from the AAA server.

In some embodiments of the present invention the operator may have a WLAN specific DNS server or servers in the case of the operator network topology requires that.

The service authorization may rely on the IP address.

The DNS resolution process used in embodiments of the present invention is as follows: The end user sends a query to a first server. The first server may then query a second server. If that second server is unable to provide the required information, the second server may refer the first server to one or more other servers (third and fourth servers). The first server would be the access controller.

## Claims

1. A communication system comprising:
a user equipment;
an access network to which said user equipment is attachable; and
an access controller connected to said access network and a domain;
said access controller being arranged to receive a query from said user equipment for a service provided by said domain or a service accessible via said domain, to check if said user equipment is authorized and if so to permit said user equipment to obtain said service from or via said domain.

2. A system as claimed in claim 1, wherein said access network comprises one of: an IP based network independent of access method; a WLAN; a DSL network; an Ethernet; a GPRS network, a 3G network; and a Bluetooth network.

3. A system as claimed in claim 1 or 2, wherein said domain is a mobile operator operated domain.

4. A system as claimed in any preceding claim, wherein said query comprises a DNS query.

5. A system as claimed in any preceding claim, comprising an authorization server function wherein said access controller is arranged to authorize said user equipment by communication with said authorization server function.

6. A system as claimed in claim 5, wherein said authorization server function comprises information defining a profile for said user equipment.

7. A system as claimed in claim 5 or 6, wherein said authorization server function is arranged to provide attributes to said access controller, said access controller being arranged to determine session parameters for said user equipment based on said attributes.

8. A system as claimed in any preceding claim, wherein said access controller is arranged to provide an authorization function if a query received from said user equipment identifies said access controller.

9. A system as claimed in any preceding claim wherein said access controller is arranged to provide an authorization function if said query received from said user identifies said access controller as a primary domain name server.

10. A system as claimed in claim 8 or 9 wherein said query comprises a DHCP query.

11. A system as claimed in any preceding claim wherein if the access controller determines that said user equipment is not authorized, a required service and/or and an IP address of an Internet host is obtained via said access network connected to the Internet.

12. A system as claimed in claim 11, wherein if said user equipment is not authorized the access controller is arranged to query a server of said access network in response to a query.

13. An access controller for use in a communication system which also comprises a user equipment, an access network to which said user equipment is attachable, said access controller being connectable to said access network and a domain, said access controller being arranged to receive a query from said user equipment for a service provided by said domain or a service accessible via said domain, to check if said user equipment is authorized and if so to permit said user equipment to obtain said service from or via said domain.

14. A controller as claimed in claim 13, wherein said access controller is arranged to authorize said user equipment by communication with an authorization server function

15. A controller as claimed in claim 13 or 14, wherein said access controller is arranged to provide an authorization function if a query received from said user equipment identifies said access controller.

16. A controller as claimed in any of claims 13 to 15, wherein if said user equipment is not authorized the access controller is arranged to query a server of said access network in response to a query.

17. A communication method comprising:
receiving at an access controller a query from user equipment attached to an access network for a service provided by a domain or a service accessible via said domain;
checking if said user equipment is authorized; and
if so to permitting said user equipment to obtain said service from or via said domain.
